# EUROPEAN PATENT APPLICATION

(11) **EP 4 821 895 A1**
(43) Date of publication of application: **14.10.2026**
(21) Application number: 26171414.1
(22) Date of filing: 09.04.2026
(51) Int. Cl.: C02F 1/72, C02F 1/32, C02F 1/76, C02F 1/78, C02F 101/12, C02F 101/22

(54) **OXIDATIVE TREATMENT OF WATER**

(30) Priority: 11.04.2025 NL 2040167
(71) Applicant: HaskoningDHV Nederland B.V., 3818 EX Amersfoort (NL)
(72) Inventor: Giesen, Andreas, 3818 EX Amersfoort (NL); de Wilt, Henrik Arnoud, 6709 TG Wageningen (NL)
(74) Representative: Nederlandsch Octrooibureau

(57) **Abstract**

The invention pertains to a method for reducing the formation of undesired oxidation products, like bromate and chromate, during oxidative treatment (OT) of water by increasing the concentration of organic matter (OM) in the water feed.

## Description

### FIELD OF THE INVENTION

The invention is in the field of oxidative treatment of water, such as ozone treatment, in for example waste water treatment plant effluent for micropollutant removal or production of water for consumption or industrial use.

### BACKGROUND OF THE INVENTION

Oxidative treatment, such as ozone treatment, of water is widely applied for the removal of recalcitrant and inert organic matter, organic micropollutants such as pharmaceutical residues or disinfection purposes. Oxidative treatment of water, such as wastewater treatment plant effluent, surface water, industrial waste streams, and the like, results in the formation of oxidation products. WO2023/078839 mentions the removal of micropollutants from water, wherein water is subjected to a consecutive combination of biological adsorbent filtration (BAF) followed by oxidation treatment (OT). BAF treatment reduces the amount of (organic) micropollutants before the water is subjected to ozone treatment. The specific combination of BAF-OT resulted in an improved removal of micropollutants. The role of bromate is undisclosed.

Some of the oxidation products from oxidative treatment of water are substances of concern which pose a risk to public health and are as such regarded as undesired substances. Bromate is one of these oxidation products and is potentially carcinogenic. On European level, it is regulated that bromate levels in treated water should be less than 10 µg/l, in some countries such as The Netherlands bromate levels are required to be less than 1 µg/l.

Several technologies have been developed for the minimisation of the formation of oxidation products, in particular for the minimisation of bromate formation.

Firstly, chemical control is a technique which is often used to reduce bromate formation. EP3943454 mentions a method for the removal of micro-contaminants from raw water using ozone, wherein bromate formation is reduced by the addition of hydrogen peroxide. US2006/0289362 concerns a water treatment method which decomposes low-degradable organic substances while supressing the production of bromate ions. The method concerns purifying water by using radicals obtained from the combination of ozone and hydrogen peroxide and the addition of a specific electron-donating substance.

Another technique often used is upstream treatment, wherein natural organic matter (NOM) and/or bromide are removed prior to ozone treatment. Upon oxidative treatment, bromate is formed from bromide. Morrison et al. (Critical Review on Bromate Formation during Ozonation and Control Options for Its Minimization, Environ. Sci. Technol. 2023 57 (47), 18393-18409) mentions the upstream removal of NOM, also referred to as dissolved organic carbon (DOC), as an effective strategy for minimizing bromate formation during ozone treatment. DOC-removal prior to ozone treatment decreases the ozone demand to achieve target ozone exposures in the ozonation treatment.

US2012/160780 describes a method for inhibition of bromate formation during oxidation of bromide ion-containing waters with ozone and/or hydrogen peroxide, focusing on the use of synthetic compounds which are effective to inhibit bromate formation without impeding desired oxidation of contaminants and/or disinfection by the oxidizing reagents. The aim is to buffer the highly reactive hydroxyl radical and thereby reduce conversion of bromide ion to bromate, while at the same time it should not significantly interfere with the desirable oxidation capacity of the ozone or hydrogen peroxide (as t-butyl alcohol would do). The preferred choice is HEDP (1-hydroxyethylidene-1,1-diphosphonic acid, also termed etidronic acid).

Alternatively, the produced undesired bromate can be removed in a downstream treatment. An example of downstream treatment to abatement bromate is activated carbon adsorption. Activated carbon adsorption is an effective treatment however the activated carbon needs to be exchanged frequently, eventually leading to chemical waste. If not enough, it is also an energy-consuming process. Another downstream treatment is chemical reduction, wherein chemical agents such as sulphite and ferrous iron are used to reduce bromate to bromide. Also, bromate can be converted to bromide by biological treatment under anaerobic conditions. In this process, the oxygen rich water after ozone treatment first needs to be brought to anaerobic conditions which requires the dosing of a carbon source like methanol or acetic acid, resulting in elevated costs and an increased CO₂-footprint.

Outside the field of wastewater or surface water treatment, US2009/272698 describes a method and a device for enhancing the effectiveness of a metal ion donor in killing microorganisms in a body of water, such as a Spa, that has been treated with ozone in the presence of bromide ions. The metal ion donor is silver, but specific to silver is that it has a tendency to complex with other compounds and become increasingly insoluble thereby reducing the effective microorganisms killing ability of the silver. In US'698 it is also recognized that bromine that is typically used after ozone usage converts to carcinogenic bromate, and it teaches to introduce small amounts of hydantoins after ozone treatment, such that the silver ions form a complex with the hydantoins and remain soluble to a higher degree thereby retaining the silver's antimicrobial activity. The preferred hydantoin is 5,5-dimethylhydantoin (DMH). The method involves a dispenser with a first housing having a water-accessible compartment containing a source of the hypobromite ion scavenger for releasing the hypobromite ion scavenger (read: DMH) when contacted by the body of water and a second housing having a water-accessible compartment containing a metal donor for releasing metal ions (read: silver) when contacted by the body of water. While perhaps useful in pools, killing microorganisms, adding silver and using synthetic pool disinfectants or biocidal DMH is not a commercially viable option in wastewater or surface water treatment.

Thus, various methods for reducing the formation of oxidation products, in particular for the reduction of bromate formation, have been developed in the prior art. A drawback of those known methods is that they are practically unfeasible in various cases (e.g. source control), require the addition of one or more chemicals or additional treatment steps. Taken together, eventually leading to higher energy consumption and an unfavourable CO₂ footprint.

Hence, in the art there is thus a need to reduce the formation of oxidation products, such as bromate, in oxidative treatment in a more environmentally friendly manner.

### SUMMARY OF THE INVENTION

The present invention overcomes the above problems by providing a process for reducing the formation of oxidation products produced during oxidative treatment (OT) of water by increasing the concentration of organic matter (OM) in the water prior to oxidative treatment.

It was surprisingly found that increasing the concentration of organic matter in the water feed prior to oxidation treatment reduces the formation of undesired oxidation products, such as bromate. This is in clear contradiction to what is currently known, and teaching away from the whole process of decreasing oxidation products as much as possible. The key part is that there is a controlled increase of organic matter in the feed. Decreasing the organic matter concentration in a wastewater sample by 35% resulted in a significant increase in bromate formation upon the treatment with ozone. Hence, an increased organic matter concentration reduced the formation of undesired oxidation products.

The inventors used this insight to develop a process wherein prior to the oxidative treatment the concentration of organic matter is increased, in a controlled way, in order to subsequently reduce the formation of undesired oxidation products, particularly bromate. It is the first time that the concentration of organic matter is increased before oxidative treatment. Known methods for reducing the formation of undesired oxidation products involve dosing environmental hazardous oxidizing agents, such as hydrogen peroxide or reducing the organic matter concentration before oxidative treatment. The present invention makes use of organic matter which is non-hazardous and non-oxidizing, and the process allows for flexibility in selecting the type and source of the organic matter. The process of the invention is associated with lower energy consumption and lower indirect greenhouse gas contribution, thus more environmental friendly.

### LIST OF PREFERRED EMBODIMENTS

1. A process for reducing the formation of oxidation products produced during oxidative treatment of water, comprising at least one oxidative treatment reactor **(OTR),** wherein the process comprises:
   a) providing a water feed to the oxidative treatment reactor; and
   b) providing organic matter to the feed of step a); and
   c) providing an oxidant to the feed of step b).
2. The process according to embodiment 1, wherein the water feed in step a) is wastewater containing precursors of oxidation products, preferably in a concentration less than 10 mg/l.
3. The process according to embodiment 2, wherein the precursor is bromide, which is preferably present in a concentration less than 10 mg/l.
4. The process according to any of the preceding embodiments, wherein the water feed provided in step a) has an organic matter concentration less than 200 mg DOC/I, preferably less than 50 mg DOC/I, more preferably less than 20 mg DOC/I.
5. The process according to any of the preceding embodiments, wherein the organic matter is supplied to the main water feed in step a), in a sidestream which is to be mixed with the main water feed of step a), directly into the oxidative treatment reactor, and/or combinations thereof.
6. The process according to any of the preceding embodiments, wherein the oxidant is supplied in the main water feed in step b), in a sidestream which is to be mixed with the main water feed in step b), directly into the oxidative treatment reactor, and/or combinations thereof.
7. The process according to any of the preceding embodiments, wherein the organic matter comprises one or more polysaccharides selected from starch, cellulose, glycogen and/or combinations thereof.
8. The process according to any of the preceding embodiments, wherein the organic matter comprises one or more organic substances that naturally are constituents of surface water, wastewater or drinking water.
9. The process according to embodiment 8, wherein the organic matter comprises humic substances, biopolymers, proteins, amino acids, hydrolysates of humic substances, low molecular weight acids (<350 gram/mol), low molecular weight neutrals (<350 gram/mol), micro-organisms and/or debris of micro-organisms.
10. The process according to any of the preceding embodiments, wherein the organic matter comprises one or more organic substances that are obtained by biological and/or chemical/physical treatment of surface water, wastewater and/or drinking water.
11. The process according to embodiments 10, wherein the organic matter comprises humic substances, primary and secondary sludge, membrane concentrate, filter backwash, digestate, condensate, screenings and/or combinations thereof.
12. The process according to any of the preceding embodiments, wherein the water feed in step a) is pretreated in biological and/or chemical/physical water treatment prior to step a).
13. The process according to any of the preceding embodiments, wherein the concentration of organic matter in the water feed is increased by the addition of waste streams from water pretreatment processes preferably the waste streams comprises waste sludge from primary or secondary clarification, membrane concentrate, filter backwash, digestate, condensate and/or screenings.
14. The process according to any of the preceding embodiments, wherein the concentration of the organic matter is increased by adding a water feed comprising a high concentration of organic matter to the water feed supplied in step a), preferably the water feed comprising a high concentration of organic matter is the water flowing towards the biological and/or chemical/physical water treatment step(s)
15. The process according to any of the preceding embodiments, wherein the oxidative treatment comprises the addition of an oxidant, wherein the oxidant can be selected from Cl₂, CIO, ClO₂, ClO₃, H₂O₂, Fenton, ferrate, ultraviolet light, ozone, and/or combinations thereof, preferably the oxidative treatment is ozone.
16. The process according to any of the preceding embodiments, wherein the organic matter concentration is measured by determining a relevant related parameter such as TOC-concentration, Specific UV absorbance (SUVA) and/or DOC-concentration in step a), during step b) and/or after step b).
17. The process according to any of the preceding embodiments, wherein the formation of oxidation products is monitored by UV-analysis, target analysis of specific oxidation products such as bromate, and/or other means after oxidation treatment, preferably by SUVA.
18. The process according to any of the preceding embodiments, wherein the concentration of oxidation products precursors is measured in the water feed provided in step a), and/or the concentration of oxidation products in the outlet of the oxidative treatment by determining a relevant related parameter such as TOC-concentration, SUVA, DOC-concentration, the measurement of a specific oxidation product precursor such as bromide, and/or the measurement of a specific oxidation product such as bromate.
19. The process according to any of the preceding embodiments, wherein the oxidation products are bromate and/or chromate, more preferably bromate.
20. The process according to any of the preceding embodiments, wherein the concentration of organic matter provided in step b) is determined by measuring flow rate, temperature, pH, conductivity, turbidity, TOC-concentration, UV-VIS, SUVA, fluorescence and/or DOC-concentration in the water feed provided in step a) and/or in the output of the oxidative treatment.
21. The process according to any of the preceding embodiments, wherein the concentration of oxidant provided in step c) is determined by measuring flow rate, temperature, pH, conductivity, turbidity, TOC-concentration, UV-VIS, SUVA, fluorescence and/or DOC-concentration in the water feed provided in step a) and/or in the output of the oxidative treatment.

### DEFINITONS

*Oxidative treatment:* Oxidative treatment is a process used in (waste)water treatment to break down pollutants and contaminants through oxidation.

*Oxidant:* An oxidant is substance that facilitates oxidation in for example oxidative treatment, preferably ozone.

*Total organic carbon* (TOC): Total organic carbon is a measure of the amount of organic carbon present in water. It represents the total amount of carbon found in organic compounds within a water sample.

*Specific UV absorbance* (SUVA): Specific UV absorbance is a method used in water and wastewater treatment to assess the nature and concentration of dissolved organic matter. *Dissolved organic carbon* (DOC): Dissolved organic carbon represents the fraction of organic carbon that is dissolved in water.

*Biological adsorbent filtration* (BAF): BAF is a water purification process, wherein the reactor comprises a biological activated filter containing adhered microorganisms. The filter material may be any type of carrier material that can adsorb micropollutants and provide a surface for microorganism to grow. In literature, when the filter material is carbon, BAF is also referred to as biological activated carbon (BAC) and biological activated carbon filtration (BACF).

### LIST OF FIGURES

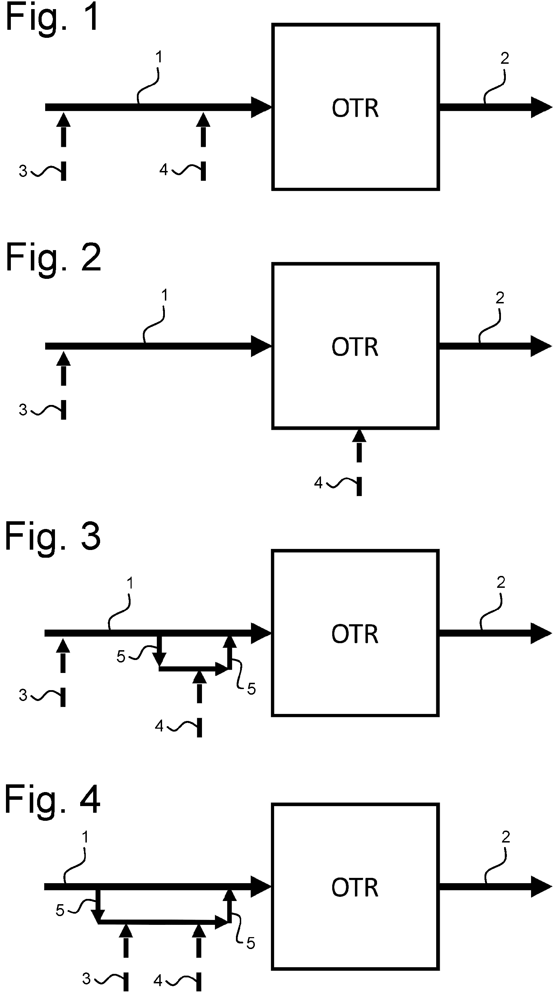

In accordance with the invention, **figure 1** shows the principle of oxidative treatment in combination with increasing the concentration of organic matter. The water is transported to an oxidative treatment reactor **OTR** via line **1.** Additional organic matter is supplied to line **1** via line **3** and thereafter the oxidant is supplied to line **1** via line **4,** both the organic matter and oxidant are supplied to the water feed before the oxidative treatment reactor **OTR.** Treated water leaves the oxidative treatment reactor **OTR** via line **2.**
**Figure 2** shows the principle of oxidative treatment in combination with increasing the concentration of organic matter. The water is transported to an oxidative treatment reactor **OTR** via line **1.** Additional organic matter is supplied to line **1** via line **3** and thereafter the oxidant is supplied directly to the oxidative treatment reactor **OTR** via line **4.** The organic matter is supplied before the oxidative treatment reactor **OTR,** whereas the oxidant is supplied to the oxidative treatment reactor **OTR.** Treated water leaves the oxidative treatment reactor **OTR** via line **2.**
**Figure 3** shows the principle of oxidative treatment in combination with increasing the concentration of organic matter. The water is transported to an oxidative treatment reactor **OTR** via line **1.** Additional organic matter is supplied to line **1** via line **3.** Thereafter, part of the water feed directed at the oxidative treatment reactor **OTR** is diverted from line **1** to a sidestream **5.** The oxidant is supplied to the sidestream **5** prior to the oxidative treatment reactor **OTR.** After the oxidant is fed to sidestream **5,** the sidestream **5** is transferred back to line **1** which is fed to the oxidative treatment reactor **OTR.** Treated water leaves the oxidative treatment reactor **OTR** via line **2.**
**Figure 4** shows the principle of oxidative treatment in combination with increasing the concentration of organic matter. The water is transported to an oxidative treatment reactor **OTR** via line **1.** Part of the water feed to the oxidative treatment reactor **OTR** is diverted from line **1** to a sidestream **5.** Additional organic matter is supplied to sidestream **5** via line **3.** After the organic matter is supplied to sidestream **5,** the oxidant is fed to sidestream **5.** Thereafter, sidestream **5** is transferred back to line **1** which is fed to the oxidative treatment reactor **OTR.** Treated water leaves the oxidative treatment reactor **OTR** via line **2.**

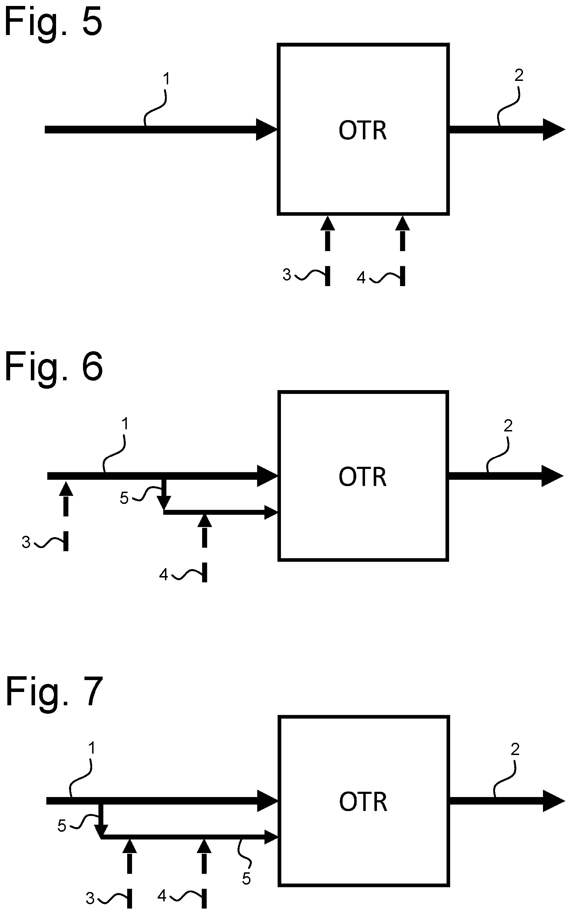

**Figure 5** shows the principle of oxidative treatment in combination with increasing the concentration of organic matter. The water is transported to an oxidative treatment reactor **OTR** via line **1.** Both the additional organic matter and the oxidant are fed to the oxidative treatment reactor **OTR.** The organic matter is supplied via line **3** prior to the oxidant which is supplied via line **4.** Treated water leaves the oxidative treatment reactor **OTR** via line **2.**
**Figure 6** shows the principle of oxidative treatment in combination with increasing the concentration of organic matter. The water is transported to an oxidative treatment reactor **OTR** via line **1.** Additional organic matter is supplied to line **1** via line **3.** Thereafter, part of the water feed to the oxidative treatment reactor **OTR** is diverted from line **1** to a sidestream **5.** The oxidant is supplied to the sidestream **5** via line **4.** After the oxidant is supplied to sidestream **5,** the sidestream **5** is directly transferred to the oxidative treatment reactor **OTR** and not transferred back to the main water feed in line **1.** Treated water leaves the oxidative treatment reactor **OTR** via line **2.**
**Figure 7** shows the principle of oxidative treatment in combination with increasing the concentration of organic matter. The water is transported to an oxidative treatment reactor **OTR** via line **1.** Part of the water feed to the oxidative treatment reactor **OTR** is diverted from line **1** to a sidestream **5.** Additional organic matter is supplied to sidestream **5** via line **3.** After the organic matter is supplied to sidestream **5,** the oxidant is fed to sidestream **5.** After addition of the oxidant to sidestream **5,** the sidestream **5** is directly transferred to the oxidative treatment reactor **OTR** and not transferred back to the main water feed in line **1.** Treated water leaves the oxidative treatment reactor **OTR** via line **2.**

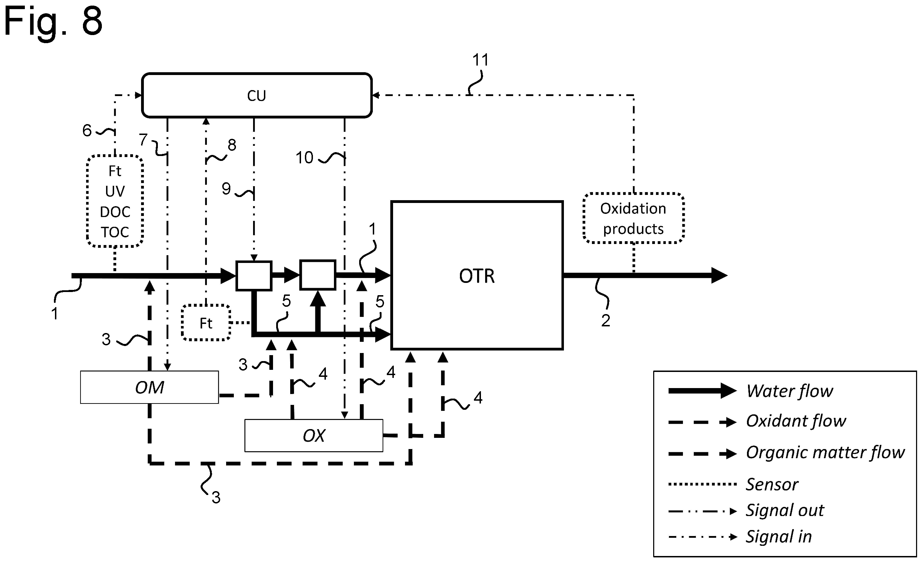

**Figure 8** displays a possible configuration of a detailed process diagram of the present invention including options for controlling the process, wherein the oxidative treatment may be according to any of figures 1 - 7. The water is transported to an oxidative treatment reactor **OTR** via line **1.** Organic matter **OM** and oxidant **OX** may be added to the water feed at different stages of the process as described in figures 1 - 7. Before adding the organic matter **OM** and oxidant **OX** the water quality can be measured by UV (SUVA), DOC, TOC or other suitable measuring devices and water quantity can be measured by a flow meter (Ft). A flow meter is often used in wastewater treatment processes to measure the flow rate of liquids. The signals **(6)** of the water quality and water quantity measurements in line **1** can be transferred to the control unit **CU**. Afterwards, the control unit **CU** sends a signal **(7)** to the dosing unit of the organic matter **OM** in order to dose the correct amount of organic matter **OM.** Before dosing the oxidant a signal of the flow meter **Ft** may be send to the control unit **CU.** The control unit **CU** can send a signal **9** to the flow of the sidestream **5** to control the flow rate in sidestream **5.** Based on input signals the control unit **CU** controls the amount of organic matter **OM** and oxidant **OX** to be dosed and the flow of the sidestream **5** to minimise the formation of oxidation products. Control is performed based on water quantity and water quality measurements of the water feed in line **1** and water quality measurement in outlet **2** of the oxidative treatment reactor **OTR.** The amount of oxidation products and/or an indication of the amount of oxidation products is measured in the output **2** of the oxidative treatment reactor **OTR.** The signal **(11)** of the water quality measurement in the output **(2)** can be transferred to the control unit **CU.** This way, the control unit **CU** can adjust the amount of organic matter **OM** and oxidation **OX** in the process by a feed-back control.

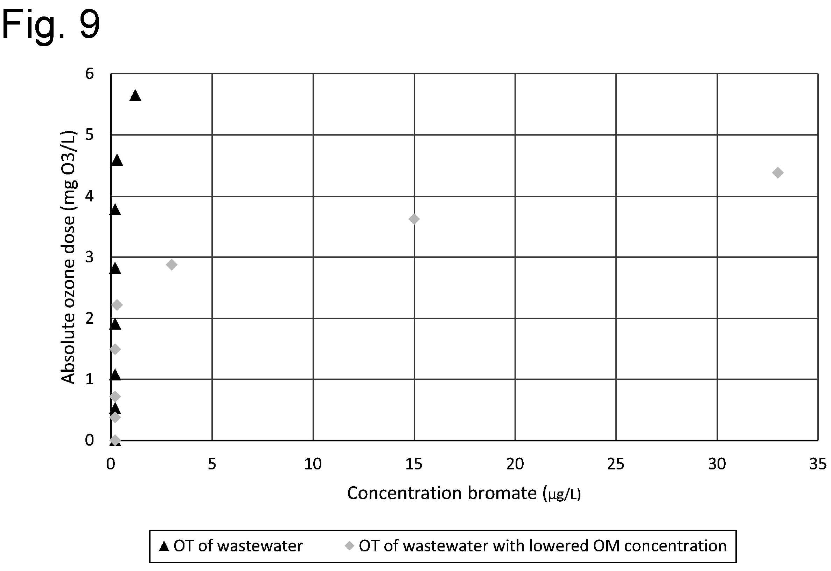

**Figure 9** displays the concentration of bromate formed at various absolute ozone doses in wastewater samples comprising a high or low organic matter concentration. \

### DESCRIPTION OF THE INVENTION

The inventions thus pertains to a process for reducing the formation of oxidation products produced during oxidative treatment of water, comprising at least one oxidative treatment reactor OTR, wherein the process comprises:
a) providing a water feed to the oxidative treatment reactor; and
b) providing organic matter to the feed of step a); and
c) providing an oxidant to the feed of step b).

The process is particularly directed to reducing the formation of oxidation products produced during oxidative treatment of (municipal and/or industrial) waste water and surface water or ground water, , most preferably (municipal and/or industrial) waste water, and - accordingly - the water feed a) is preferably (municipal and/or industrial) waste water and surface water or ground water, most preferably (municipal and/or industrial) waste water.

While the process could be advantageously applied to the BAF-OT process according to WO2023/078839, its contents herein incorporated by reference, the same advantages are also found for other water treatment processes involving an OT step.

Reference is made to Figure 1 providing a schematic overview of the process. In a first step, a water feed is transported to an oxidative treatment reactor. In a second step, organic matter is provided to the water feed to increase the concentration of organic matter in said water feed. In a third step, the water feed with the increased concentration of organic matter is subjected to oxidative treatment, in other words an oxidant is provided. The controlled addition of organic matter before oxidation treatment yields reduced oxidation products levels, such as bromate in the treated water.

The process according to all aspects of the invention, and preferred embodiments thereof, are presented in more detail below. The skilled person will recognise that, following the same principles, alternative embodiments can be designed with modified details that achieve the same result and are considered covered by the claims.

### Process

The invention can beneficially be used to improve the treatment performance for the purification of municipal and/or industrial wastewater. Typically, such wastewater is treated in biological processes like activated sludge, aerobic granular sludge (Nereda^{®}), MBBR, IFAS, or processes alike and often in combination with chemical/physical treatment steps like clarification, flocculation, filtration, precipitation, or the like. In these conventional wastewater treatment processes, still a significant concentration of micropollutants, such as pharmaceutical residues, remains. To achieve enhanced removal of these micropollutants, the wastewater as purified by such conventional treatment processes (i.e. treated wastewater) is subsequently fed to a post-treatment. An effective post-treatment is the use of a biological treatment process, such as biological activated carbon filtration, combined with an oxidative treatment, such as ozone treatment. However, in this two-step process, undesired oxidation products can be formed during the oxidative treatment. The process according to the invention minimizes the formation of these undesired oxidation products.

Similarly, the invention can be beneficially used in the purification of surface water or ground water in the production of drinking water or industrial process water. Typically, such water is purified in a treatment train comprising various chemical, physical and biological treatment processes. The purification process provides an efficient removal of (organic) bulk- and micropollutants, suspended matter, pathogens and alike to concentrations safe enough for use. However, these methods fail to lower the concentration of bulk pollutants and natural organic compounds sufficiently. Accordingly, the need for post-treatment such as biological activated carbon filtration, combined with an oxidative treatment remains. During these methods undesired oxidation products can be formed. The process according to the invention minimizes the formation of these undesired oxidation products.

In an embodiment, the invention concerns a process for reducing the formation of oxidation products produced during oxidative treatment of water, comprising at least one oxidative treatment reactor OTR, wherein the process comprises:
a) providing a water feed to the oxidative treatment reactor (OTR); and
b) providing organic matter to the feed (a); and
c) providing an oxidant to the feed (b),
wherein the process results in a reduction (i.e. a reduced formation) of the oxidation products bromate and/or chromate, more preferably bromate. In the context of the invention, reduced formation of these oxidation process is based on a comparison with the same process without adding organic matter to the feed prior or in OTR (step b). The process of the invention preferably results in that the water leaving the OTR has bromate levels less than 10 µg/l, more preferably less than 1 µg/l. By controlling the concentration and if desired the source or quality of organic matter which is provided in (b), the process can be further optimized.

In a preferred embodiment, the water feed in step a) is wastewater such as water derived from WWTP, typically organic micropollutant-containing wastewater. In another preferred embodiment, the water feed provided in step a) is pretreated in biological and/or chemical/physical water treatment prior to step a).

In one embodiment, the water feed in step a) which is fed to the OTR comes directly from biological adsorbent filtration (BAF). Adsorbant filters are widely used for the purification and processing of water and wastewater. Simply put, these filters are created by packing together a bed of rough granules, and the water that is meant to be treated is then run over this filtering bed of assemblage. However, biological adsorbant filters are less common; these involve microorganisms adhered to the adsorbant filter, which microorganisms degrade the organic materials in the water to be treated. The biological adsorbant filtration (BAF) reactor is advantageously filled with an adsorbent to a content of the total reactor volume ranging between 10 - 100%, preferably between 50 - 100%, and most preferably between 80 - 100%. The water is flowing through the adsorbent material in the BAF. The polluted water is led through the adsorption bed, upon which adheres aerobic biomass next to the adsorption of organic molecules.

The adsorbent, as defined in the introductory part above, which is the filling material of the BAF, may be any type of virgin, already used or reactivated granular activated carbon, any other type of adsorptive material such as charcoal, woodchips, or activated biomass, or any type of carrier material for microorganisms, or combinations thereof, provided the carrier material can both adsorb micropollutants and provide a surface for microorganisms to grow. In a preferred embodiment, the BAF is biological activated carbon. Biological activated carbon technology is developed on the basis of activated carbon technology. It uses the synergistic effect of activated carbon adsorption and biodegradation to treat wastewater, and effectively remove organic matter (especially the biodegradable part). The most preferred form is granular activated carbon (GAC). A suitable but non-limiting example of a suitable BAC is described in EP0821806, its contents herewith incorporated by reference.

The water feed provided in step a) of the process preferably is wastewater containing precursors of oxidation products, for example bromide and/or chrome, preferably the wastewater has bromide concentrations less than 10 mg/l, more preferably less than 3 mg/l. Preferably, the bromide concentration in the water feed is not affected by the addition of organic matter in step b), thus the bromide concentration in step a) and step b) of the process are similar. During oxidative treatment these precursors of oxidation products are transformed into oxidation products, such as bromate. In a preferred embodiment, the oxidation precursor is chrome and/or bromide, more preferably bromide.

Prior to the oxidative treatment the wastewater is typically already treated in a conventional wastewater treatment process, such as an activated sludge system, to remove easily degradable bulk organic compounds, yielding wastewater with lower dissolved organic carbon (DOC) concentrations. In a preferred embodiment, the water feed provided in step a) has an organic matter concentration less than 200 mg DOC/I, more preferably less than 50 mg DOC/I, most preferably less than 20 mg DOC/I.

In another embodiment, the water feed provided in step a) has an organic matter concentration less than 2500 mg DOC/I.

In addition to the organic matter present in the water feed provided in step a) of the process additional organic matter is added in step b) of the process. With additional organic matter is meant that in addition to the organic matter already present in the water feed of step a) extra organic matter is added from another source than the water feed of step a) itself to increase the concentration of organic matter of the water provided in step a).

In an embodiment, the organic matter is preferably supplied to the main water feed in step a), in a sidestream which is to be mixed with the main water feed of step a), directly into the oxidative treatment reactor, and/or combinations thereof. The first embodiment is depicted in Figures 1 - 3 and 6, the second embodiment is depicted in Figures 4 and 7, and the third embodiment is depicted in Figure 5. The organic matter is supplied to the main water feed to increase the concentration of organic matter in said feed. It was surprisingly found that increasing the concentration of organic matter before oxidative treatment lead to an decrease in the formation of undesired oxidation products, and these insights can be used to control the organic matter input in favor of reduced bromate output.

In an embodiment, preferably less than 20 mg DOC/I organic matter is dosed in step b) of the process, more preferably less than 10 mg DOC/I, most preferably between 1 and 5 mg DOC/I.

Preferably, the oxidant is supplied in the main water feed in step b), in a sidestream which is to be mixed with the main water feed in step b), directly into the oxidative treatment reactor, and/or combinations thereof. In each and every embodiment, the oxidant is only added to the water feed after providing a controlled concentration of organic matter to the water feed i.e. the oxidative treatment is only initiated after adding a controlled amount of organic matter to the water feed. The first embodiment is depicted in Figure 1, the second embodiment is depicted in Figures 3, 4, 6 and 7 and the third embodiment is depicted in Figures 2 and 5. The oxidant is supplied after the organic matter concentration in said water feed is increased.

In a preferred embodiment, the organic matter is provided to the water feed prior to oxidative treatment. The organic matter is supplied and mixed such that it is homogenously present in the water before oxidative treatment, in other words before the oxidant is supplied to the water feed.

In an embodiment, the oxidant is preferably ozone and is provided in a range of between 0.05 - 2 g O₃/g DOC, more preferably between 0.1 - 1 g O₃/g DOC, most preferably between 0.1 - 0.5 g O₃/g DOC. Preferably, at a DOC concentration of 30 mg/L in step b) the ozone dose ranges between 3 - 60 mg O₃/L, more preferably between 3 - 15 mg O₃/L.

### Control

An important feature of the process of the invention is the mechanism to control the formation of oxidation products. This can be done by, for example, controlling the organic matter concentration by determining a relevant related parameter such as by measuring or monitoring the total organic carbon (TOC) concentration, specific UV absorbance (SUVA), and dissolved organic carbon (DOC) in the water feed and outflow of the oxidative treatment, and the specific ozone dose (g O₃/g TOC or g O₃/g DOC or g O₃/SUVA) and/or a flow proportional ozone dose (g O₃/m³) in the oxidative treatment. As displayed in Figure 8 also other options for controlling the process are possible such as controlling the oxygen input and the ozone dose in the oxidative treatment.

In a preferred embodiment, the organic matter concentration is measured by TOC-concentration, SUVA, DOC-concentration and/or other suitable measurement parameters. Preferably, the organic matter concentration is measured by SUVA in step a), during step b) and/or after step b) of the process. By closely monitoring the organic matter levels during the process the dose of the oxidant can be adjusted accordingly. In the case the oxidant is ozone, this prevents overdosing ozone and thereby prevents the formation of undesired oxidation products and renders the process more efficient.

In a preferred embodiment, using TOC-concentration, SUVA, DOC-concentration and/or the concentration of a specific oxidation product precursor such as bromide the concentration of oxidation products precursors is preferably measured in the water feed provided in step a), and/or the concentration of oxidation products in the outlet of the oxidative treatment. The advantage of monitoring the amounts of oxidation products and/or precursors is that the formation of undesired oxidation products can be prevented and thereby an additional treatment step to remove these oxidation products, leading ultimately to a more efficient process.

It is preferred to monitor the formation of oxidation products after oxidative treatment. In other words, the formation of oxidation products is preferably measured at the outlet of the oxidative treatment reactor.

In a preferred embodiment the concentration of organic matter provided in step b) is determined by measuring flow rate, temperature, pH, conductivity, turbidity, TOC-concentration, UV-VIS, SUVA, fluorescence, DOC-concentration and/or other organic matter depending sensor data in the water feed provided in step a) and/or in the output of the oxidative treatment. Alternatively or additionally, the concentration of oxidant provided in step c) is determined by measuring flow rate, temperature, pH, conductivity, turbidity, TOC-concentration, UV-VIS, SUVA, fluorescence, DOC-concentration, and/or other organic matter depending sensor data in the water feed provided in step a) and/or in the output of the oxidative treatment.

### Oxidative treatment

Oxidative treatment (OT) is often applied for the removal of recalcitrant and inert organic matter, organic micropollutants such as pharmaceutical residues, or disinfection purposes. By increasing the concentration of organic matter (OM) in the water feed, the formation of undesired oxidation products during oxidative treatment can be reduced.

In an advantageous embodiment of the process of the invention, the oxidative treatment process can be embodied by any possible oxidation process suitable for oxidizing micropollutants in water, preferably wastewater. In a preferred embodiment, oxidative treatment is achieved by using oxidants like Cl₂, ClO, ClO₂, ClO₃, H₂O₂, Fenton, ferrate, or combinations thereof. Preferably, the oxidative treatment is ozone treatment. In preferred another embodiment, Cl₂, CIO, ClO₂, ClO₃, H₂O₂, Fenton, ferrate, or combinations thereof may be used in addition to ozone treatment.

The formation of oxidation products is monitored by UV-analysis, target analysis of specific oxidation products such as bromate, and/or other means after oxidation treatment, preferably by SUVA. The concentration of oxidation product precursors can be measured in the water feed provided in step a), and/or the concentration of oxidation products such as bromide, and/or the concentration of a specific oxidation product such as bromate in the outlet of the oxidative treatment, can be determined or monitored in terms of TOC-concentration, SUVA and/or DOC-concentration.

In a preferred embodiment, the ozone dose in the oxidative treatment is more than 2 mg O₃/L, more preferably more than 2.5 mg O₃/L. The invention is not limited to specific amounts of oxidant and does not attempt to alter conventional oxidation treatment as applied in the art. The applied ozone dose is controlled by the TOC, DOC and/or SUVA concentration in the water feed directed towards the oxidative treatment reactor (OTR), but also other means of controlling the ozone dose are possible. The skilled person is aware of the conditions of traditionally applied wastewater oxidation treatment to remove organic micropollutants.

In a preferred embodiment, the process for oxidative treatment is a process for the treatment of wastewater treatment plant effluent, for production of water for consumption, surface water treatment and/or industrial use.

### Organic matter

Organic matter in wastewater refers to various organic compounds present in water, which can come from natural and human-made sources.

A diverse array of organic matter with various origins can be used to increase the organic matter concentration in wastewater. In a preferred embodiment, the organic matter is not etidronic acid or a hydantoin, or another synthetic compound or chemical which would (selectively) reduce conversion of bromide ion to bromate, while at the same time not interfere with the desirable oxidation capacity of the ozone or hydrogen peroxide. The inventors found that the intricate use of such man-made chemicals can be avoided by controlling the formation of oxidation products by adding organic matter commonly occurring or indigenous to waste water or surface water, or organic matter of natural origin, to the process.

In one embodiment, the organic matter preferably comprises naturally occurring substances or non-synthetic organic matter, preferably one or more polysaccharide, such as starch, cellulose, glycogen and/or combinations thereof. In a preferred embodiment, these naturally occurring organic substances are added individually or as a mixture to step b) of the process. The term 'naturally occurring' means that these are of natural origin and not man-made or synthesized.

In another embodiment, the organic matter preferably comprises one or more organic substances which are characteristic or commonly present in surface water, wastewater or drinking water. Preferably, the organic matter comprises humic substances, biopolymers (like polysaccharides), proteins and amino acids, hydrolysates of humic substances, low molecular weight acids (<350 g/mol), low molecular weight neutrals (<350 g/mol), micro-organisms, debris of micro-organisms and/or combinations thereof. Humic substances may comprise fulvic acids and/or humic acids. Low molecular weight acids are small organic compounds characterized by their ability to donate protons, which makes them acidic and highly soluble in water. Examples of low molecular weight acids are formic acid, acetic acid, lactic acid and oxalic acid. Low molecular weight neutrals are neutral organic molecules that are dissolved in water. The neutrals are characterized in that they have a low molecular weight and do not comprise a charge. Examples of low molecular weight neutrals are alcohols, aldehydes, ketones, sugars and/or amino acids.

In another preferred embodiment, the organic matter comprises one or more organic substances that are obtained by biological and/or chemical/physical treatment of surface water, wastewater or drinking water i.e. one or more organic substances from a surface water, waste water or drinking water source, preferably one or more organic substances from a surface water or waste water source. In a preferred embodiment, the organic matter is derived from or provided by a waste water treatment stream, preferably from an on site waste water treatment stream. This is an economically favored embodiment. Preferably, the organic matter derived from a waste water treatment stream comprises humic substances, primary and secondary sludge, membrane concentrate, filter backwash, digestate, condensate, screenings, and/or combinations thereof.

These organic matter species can be obtained from the treatment site at hand and/or from other treatment sites, most preferably from the treatment site at hand ('on site').

In a more preferred embodiment the organic matter is provided in the form of an organic matter-containing surface water or wastewater. By using a waste water or surface water stream, preferably from the treatment side at hand (on site), the concentration of organic matter in the feed a) is increased before oxidative treatment by adding another water feed stream comprising a high concentration of organic matter to the water feed supplied in step a), preferably a water feed stream having a concentration of organic matter that is at least 5%, more preferably at least 10% higher in organic matter compared to water feed a). Preferably, the water feed comprising a high concentration of organic matter is the water flowing towards the biological and/or chemical/physical water treatment step(s). Accordingly, the water has not been treated with biological, chemical or physical steps. In this particular embodiment, the organic matter is preferably supplied by the wastewater feed of a pre-treatment process, preferably the feed of the pre-treatment by-passes the pretreatment process and is directly supplied as organic matter to the oxidative process according to the invention.

In another preferred embodiment, the water feed comprising a high concentration of organic matter is a waste stream from water pretreatment processes. Preferably, the waste streams comprises waste sludge from primary or secondary clarification, membrane concentrate, filter backwash, digestate, condensate and/or screenings. In a preferred embodiment, the water pretreatment processes are upstream biological treatment of surface water, chemical/physical treatment of surface water, wastewater and/or drinking water.

The organic matter concentration can be measured by determining a relevant related parameter such as TOC-concentration, Specific UV absorbance (SUVA) and/or DOC-concentration in step a), during step b) and/or after step b). In addition or alternatively, the concentration of organic matter provided in step b) and/or step c) can be determined by measuring flow rate, temperature, pH, conductivity, turbidity, TOC-concentration, UV-VIS, SUVA, fluorescence and/or DOC-concentration in the water feed provided in step a) and/or in the output of the oxidative treatment.

### EXAMPLE

### Example 1

To demonstrate the benefit of the invention, the applicant has executed laboratory trials on the effect of the organic matter concentration on the formation of the oxidation product bromate.

Effluent of a waste water treatment plant (WWTP) containing a bromide concentration of 0.3 - 0.5 mg/L and a bromate concentration below the detection limit (<0.2 µg/L) was collected. The WWTP-effluent samples were divided into two samples:
Sample 1 was not further processed prior to oxidative treatment.
Sample 2 was, prior to oxidative treatment, treated in a biological treatment comprising a biological activated carbon filter (FILTRASORB^{®} TL830 granular activated carbon, empty bed contact time approximately 60 minutes, full aerobic conditions).

The oxidative treatment was the same for samples 1 and 2. Ozone treatment was tested as the oxidation treatment in a range of between 0 and 5.6 mg O₃/L.

The biological treatment reduced the organic matter concentration in sample 2 by 35%. Hence, the organic matter concentration in sample 2 was lower than in unprocessed effluent sample 1. The bromide concentration in sample 2 was not affected by the biological treatment.

Under fully controllable and comparable conditions the impact of the difference in organic matter concentration on bromate formation was determined.

The results are presented in Figure 9.

As can be seen in Figure 9, when applying an ozone dose of more than 2 mg/L, there was a significant difference in the formation of bromate: The *unprocessed* WWTP-effluent, which contained the highest organic matter concentration, resulted in lower concentrations of bromate. At ozone doses of 2 mg O₃/L or higher, the oxidative treatment of WWTP-effluent after biological treatment, which contained a *lower* organic matter concentration, resulted in *increased* bromate concentrations. Upon using a dosage of 3 mg O₃/L in sample 2 the bromate concentration exceeded the bromate levels as required in The Netherlands for surface water quality and when using a dosage of 3.5 mg O₃/L in sample 2 European levels for safe drinking water were well exceeded. While when applying an ozone dosage of 4.5 mg O₃/L in sample 1 comprising an increased organic matter concentration the bromate concentration was only 0.3 µg/L, thus remaining well within acceptable limits.

Thus, an increased organic matter concentration during oxidative treatment reduces the formation of oxidation products, in specific bromate.

## Claims

1. A process for reducing the formation of oxidation products, preferably bromate and/or chromate, produced during oxidative treatment of water, comprising at least one oxidative treatment reactor **(OTR),** wherein the process comprises:
a) providing a water feed to the oxidative treatment reactor; and
b) providing organic matter to the feed of step a); and
c) providing an oxidant to the feed of step b).

2. The process according to claim 1, wherein the water feed in step a) is wastewater containing precursors of oxidation products, wherein the precursor is preferably bromide, preferably in a concentration less than 10 mg/l.

3. The process according to any of the preceding claims, wherein the water feed provided in step a) has an organic matter concentration less than 200 mg DOC/I, preferably less than 50 mg DOC/I, more preferably less than 20 mg DOC/I.

4. The process according to any of the preceding claims, wherein the organic matter is supplied to the main water feed in step a), in a side stream which is to be mixed with the main water feed of step a), directly into the oxidative treatment reactor, and/or combinations thereof.

5. The process according to any of the preceding claims, wherein the oxidant is supplied in the main water feed in step b), in a sidestream which is to be mixed with the main water feed in step b), directly into the oxidative treatment reactor, and/or combinations thereof.

6. The process according to any of the preceding claims, wherein the organic matter is or comprises naturally occurring, non-synthetic organic matter, and preferably comprises one or more polysaccharides selected from starch, cellulose, glycogen and/or combinations thereof.

7. The process according to any of the preceding claims, wherein the organic matter is provided in the form or organic matter-containing surface water or wastewater, preferably having a concentration of organic matter that is at least 5%, more preferably at least 10% higher in organic matter compared to the water fed in step a).

8. The process according to claim 7, wherein the organic matter comprises humic substances, biopolymers, proteins, amino acids, hydrolysates of humic substances, low molecular weight acids (<350 gram/mol), low molecular weight neutrals (<350 gram/mol), micro-organisms and/or debris of micro-organisms.

9. The process according to any of the preceding claims, wherein the organic matter comprises one or more organic substances that are obtained by biological and/or chemical/physical treatment of surface water, wastewater and/or drinking water.

10. The process according to claim 9, wherein the organic matter comprises humic substances, primary and secondary sludge, membrane concentrate, filter backwash, digestate, condensate, screenings and/or combinations thereof.

11. The process according to any of the preceding claims, wherein the water feed in step a) is pretreated in biological and/or chemical/physical water treatment prior to step a).

12. The process according to any of the preceding claims, wherein the concentration of organic matter in the water feed is increased by the addition of waste streams from water pretreatment processes preferably the waste streams comprises waste sludge from primary or secondary clarification, membrane concentrate, filter backwash, digestate, condensate and/or screenings.

13. The process according to any of the preceding claims, wherein the concentration of the organic matter is increased by adding a water feed comprising a high concentration of organic matter to the water feed supplied in step a), preferably the water feed comprising a high concentration of organic matter is the water flowing towards the biological and/or chemical/physical water treatment step(s)

14. The process according to any of the preceding claims, wherein the oxidative treatment comprises the addition of an oxidant, wherein the oxidant can be selected from Cl₂, CIO, ClO₂, ClO₃, H₂O₂, Fenton, ferrate, ultraviolet light, ozone, and/or combinations thereof, preferably the oxidative treatment is ozone.
